# EUROPÄISCHE PATENTANMELDUNG

(11) **EP 4 199 212 A1**
(43) Veröffentlichungstag der Anmeldung: **21.06.2023**
(21) Anmeldenummer: 22205045.2
(22) Anmeldetag: 02.11.2022
(51) Int. Cl.: H01M 50/204, H01M 50/249, H01M 50/264, H01M 50/271

(54) **BATTERIEANORDNUNG MIT BATTERIEMODULEN UND SPANNBÄNDERN ZUR FIXIERUNG, KRAFTFAHRZEUG MIT BATTERIEANORDNUNG**

(30) Priorität: 16.12.2021 DE 102021133441
(71) Anmelder: Audi AG, 85057 Ingolstadt (DE)
(72) Erfinder: SCHÜSSLER, Martin, 85092 Kösching (DE); THURMEIER, Markus, 84166 Adlkofen (DE)

(57) **Zusammenfassung**

Beschrieben wird eine Batterieanordnung (10) mit wenigstens einem blockartigen Batteriemodul (12), das mehrere Batteriezellen (20) in einem Modulgehäuse (14) enthält, einer Grundplatte (30) mit einer Oberseite (32) und einer Unterseite (40), wobei das Batteriemodul (12) auf der Oberseite (32) angeordnet ist. Dabei ist vorgesehen, dass die Batterieanordnung (10) wenigstens ein Spannband (34) aufweist, wobei das Spannband (34) übergreifend an dem Batteriemodul (12) angeordnet ist und mit der Grundplatte (30) verbunden ist, derart dass das Batteriemodul (12) mittels des Spannbands (34) auf der Grundplatte (30) fixierbar oder fixiert ist. Die Batterieanordnung kann in einem Kraftfahrzeug angeordnet sein, das zumindest teilweise elektrisch betrieben wird.

## Beschreibung

Die Erfindung betrifft eine Batterieanordnung mit wenigstens einem blockartigen Batteriemodul, das mehrere Batteriezellen in einem Modulgehäuse enthält, und einer Grundplatte mit einer Oberseite und einer Unterseite, wobei das Batteriemodul auf der Oberseite angeordnet ist. Derartige Batterieanordnungen kommen insbesondere in Kraftfahrzeugen zum Einsatz, die zumindest teilweise elektrisch angetrieben sind.

Aus der DE 20 2008 059 961 ist ein Batteriemodul mit mehreren Batteriezellen bekannt, wobei das Batteriemodul durch zwei Spannbänder mit einer Kühlplatte verbunden ist. Ein derart verspanntes Batteriemodul kann dann in einer übergeordneten Batterieanordnung, insbesondere einem Batteriegehäuse angeordnet und mit diesem verschraubt werden.

Ergänzend wird noch auf folgende Druckschriften hingewiesen, die sich auf das Verspannen von Batteriezellen zu einem Batteriemodul beschäftigen: DE 10 2018 127 308 A1, DE 10 2018 217 253 A1, DE 10 2018 218 377 A1, DE 10 2010 036 684 A1, DE 195 46 556 C1, WO 2012/120107 A1.

Die der Erfindung zu Grunde liegende Aufgabe wird darin gesehen, eine Batterieanordnung anzugeben, bei der insbesondere mehrere Batteriemodule in einfacher und effizienter Weise befestigt werden können.

Diese Aufgabe wird gelöst durch eine Batterieanordnung mit den Merkmalen des Patentanspruchs 1 und durch ein Kraftfahrzeug mit den Merkmalen des Patentanspruchs 10. Vorteilhafte Ausgestaltungen mit zweckmäßigen Weiterbildungen sind in den abhängigen Patentansprüchen angegeben.

Vorgeschlagen wird also eine Batterieanordnung mit wenigstens einem blockartigen Batteriemodul, das mehrere Batteriezellen in einem Modulgehäuse enthält, und mit einer Grundplatte mit einer Oberseite und einer Unterseite, wobei das Batteriemodul auf der Oberseite angeordnet ist. Dabei ist vorgesehen, dass die Batterieanordnung wenigstens ein Spannband aufweist, wobei das Spannband übergreifend an dem Batteriemodul angeordnet ist und mit der Grundplatte verbunden ist, derart dass das Batteriemodul mittels des Spannbands auf der Grundplatte fixierbar oder fixiert ist.

Das Batteriemodul bzw. mehrere Batteriemodule wird bzw. werden somit an der Grundplatte mittels eines Spannbands verspannt und befestigt. Hierdurch kann auf eine bekannte und aufwändige Verschraubung von Batteriemodulen verzichtet werden. Der Einsatz eines oder mehrere Spannbänder führt auch zu einer Gewichtsreduktion verglichen mit Verschraubungen, die auch entsprechende, insbesondere stabile (metallische) Flanschabschnitte an den Batteriemodulen voraussetzen.

Die Batteriemodule können eine Hochvolt-Batterie für ein zumindest teilweise elektrisch betriebenes Kraftfahrzeugen bilden.

Bei der Batterieanordnung können an der Grundplatte wenigstens zwei Fixierstellen vorgesehen sein, an denen das Spannband an der Grundplatte gehalten ist. An den beiden Fixierstellen können jeweilige Enden des Spannbands relativ zu der Grundplatte fixiert werden. Die beiden Fixierstellen können dabei auch sehr nahe beieinander liegen, so dass die beiden Fixierstellen eine einzelne Fixiereinheit bilden können.

Bei der Batterieanordnung kann die Grundplatte wenigstens eine Durchgangsöffnung aufweisen, durch die das Spannband geführt ist, wobei eine zugeordnete Fixierstelle an der Unterseite der Grundplatte vorgesehen ist.

Um die Einleitung von Kräften zu optimieren kann das Spannband an wenigstens einer der Fixierstellen umgelenkt angeordnet sein. Insbesondere können den Fixierstellen Umlenkelemente zugeordnet sein, an denen das Spannband umgelenkt wird. Fixierstellen können auch dahingehend ausgeführt sein, dass das Spannband lediglich durch Umlenkung bzw. Richtungsänderung gehalten ist, aber an der umlenkenden Fixierstelle noch keine eigentliche Befestigung des Spannbands erfolgen muss.

Bei der Batterieanordnung kann das Spannband an wenigstens einer der Fixierstellen mittels eines Vergussmassenelements befestigt sein. Mit anderen Worten kann das Spannband bzw. dessen Ende im Bereich einer Fixierstelle materialschlüssig mit der Grundplatte verbunden werden durch Einbringen einer Vergussmasse. Der Bereich, in den die Vergussmasse eingebracht wird, kann dabei auch relativ zu dem zu vergießenden Spannband geneigt ausgeführt sein, derart dass die eingebrachte Vergussmasse eine Art Keil bildet.

Bei dem Batteriemodul kann das Modulgehäuse eine Modulabdeckung aufweisen, welche die Batteriezellen abdeckt, wobei die Modulabdeckung in jeweiligen Randbereichen, die an Seitenwänden des Modulgehäuses gelagert sind, eine geringere Höhe aufweist als in einem mittigen oder zentralen Bereich. Dabei kann eine von den Batteriezellen abgewandte Seite der Modulabdeckung zumindest abschnittsweise geneigt oder/und gekrümmt verlaufen, insbesondere konvex gekrümmt sein. Eine derartige Ausgestaltung der Modulabdeckung dient einer optimalen Kräfteverteilung, wenn das wenigstens eine Spannband übergreifend entlang der Modulabdeckung verläuft. Dabei liegt das Spannband insbesondere auf der von den Batteriezellen abgewandten Seite der Modulabdeckung auf.

Bei der Batterieanordnung können mehrere nebeneinander auf der Grundplatte angeordnete Batteriemodule durch wenigstens ein durchgehendes Spannband gehalten sein, das übergreifend an jedem Batteriemodul angeordnet und zwischen zwei benachbarten Batteriemodulen im Bereich der Grundplatte umgelenkt wird. Mit anderen Worten kann ein Spannband mäanderartig ausgehend von der Grundplatte über jedes einzelne Batteriemodul geführt werden, wobei das Spannband zwischen zwei benachbarten Batteriemodulen nach unten zur Grundplatte geführt wird, wo es an einer umlenkenden Fixierstelle wieder nach oben und über das nächste Batteriemodul geführt wird. Nach dem letzten Batteriemodul kann dann die abschließende Befestigung des Spannbands mittels der oben erwähnten Vergussmasse erfolgen.

Die Batterieanordnung kann auch eine Deckplatte aufweisen, welche die Batteriemodule abdeckt, wobei ein weiteres Spannband mit der Deckplatte und den Batteriemodulen verbunden ist. Hierdurch können die Batteriemodule sowohl mit der Grundplatte als auch mit der Deckplatte verspannt werden unter Verwendung von einem jeweiligen Spannband.

Bei der Batterieanordnung kann zwischen dem Modulgehäuse und der Grundplatte wenigstens ein Dämpfungselement oder/und rutschhemmendes Element angeordnet sein. Dabei wird beispielsweise an ein flächiges bzw. mattenartiges Element gedacht, auf dem das Batteriemodul angeordnet ist. Alternativ können auch mehrere kleinere Elemente vorgesehen sein, etwa in der Art von mehreren Lagern, auf denen das Batteriemodul abgestützt ist.

Das bei der Batterieanordnung eingesetzte Spannband kann ein Verbundmaterialtape mit Glasfasern oder/und Kohlefasern oder/und Basaltfasern sein. Derartige Spannbänder zeichnen sich insbesondere durch hohe Zugfestigkeit aus, wobei sie eine ausreichende Flexibilität für die Montage aufweisen.

Ein Kraftfahrzeug mit zumindest teilweise elektrischem Antrieb kann mit einer oben beschriebenen Batterieanordnung ausgeführt sein. Dabei können die Batteriemodule eine Hochvolt-Batterie für das Kraftfahrzeug bilden.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: in einer vereinfachten und schematischen Schnittdarstellung eine Batterieanordnung, die mittels Spannband an einer Grundplatte befestigt ist;
- Fig. 2: in den Teilfiguren A) und B) vereinfacht und schematisch Beispiele von Fixierstellen an einer Unterseite der Grundplatte;
- Fig. 3: in den Teilfiguren A) und B) vereinfacht und schematisch Beispiele von Fixierstellen an einer Oberseite der Grundplatte;
- Fig. 4: in einer vereinfachten und schematischen Schnittdarstellung eine Batterieanordnung, die mittels Spannband an einer mittigen bzw. zentralen Fixierstelle an der Grundplatte befestigt ist;
- Fig. 5: in einer vereinfachten und schematischen Schnittdarstellung ein Beispiel einer Batterieanordnung mit zwei benachbarten Batteriemodulen, die durch jeweilige Spannbänder gehalten sind;
- Fig. 6: in einer vereinfachten und schematischen Schnittdarstellung ein weiteres Beispiel einer Batterieanordnung mit zwei benachbarten Batteriemodulen, die durch jeweilige Spannbänder gehalten sind;
- Fig. 7: in einer vereinfachten und schematischen Schnittdarstellung ein Beispiel einer Batterieanordnung mit mehreren benachbarten Batteriemodulen, die mittels eines durchgehenden und mehrfach umgelenkten Spannbands an der Grundplatte befestigt sind;
- Fig. 8: in den Teilfiguren A) und B) zwei Schnittdarstellungen eines Beispiels einer Batterieanordnung mit einer Abdeckplatte, wobei zumindest zwei Spannbänder vorgesehen, die beispielhaft mit der Grundplatte oder der Abdeckplatte verbunden sind.

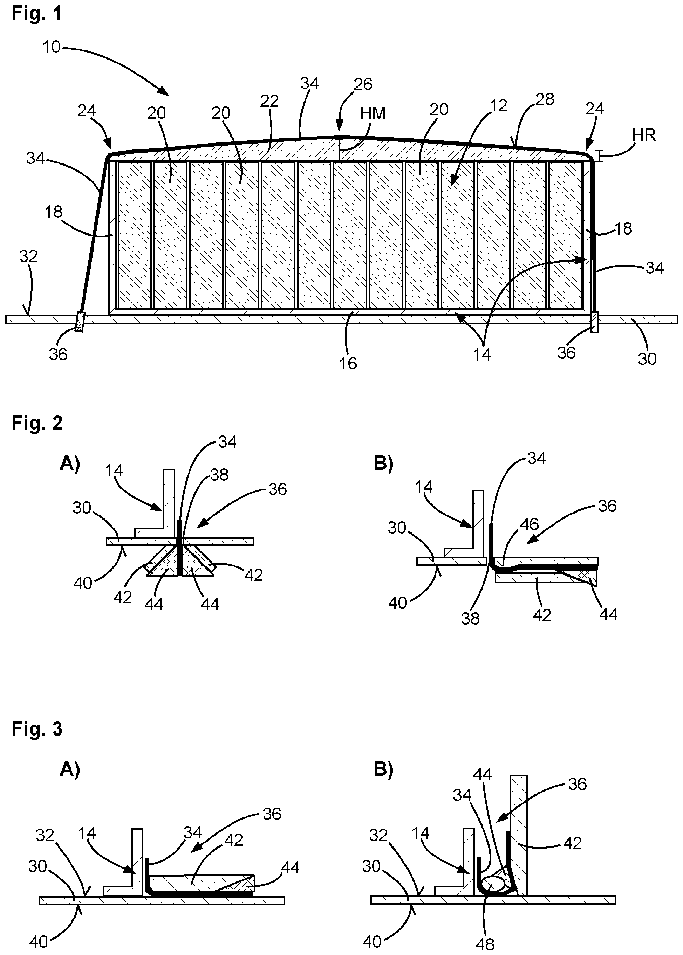

In Fig. 1 ist in einer vereinfachten und schematischen Schnittdarstellung eine Batterieanordnung 10 mit einem Batteriemodul 12 dargestellt. Es wird darauf hingewiesen, dass eine Batterieanordnung 10 nicht nur ein Batteriemodul 12 aufweisen kann, sondern dass eine Batterieanordnung 10 üblicherweise mehrere Batteriemodule 12 aufweist, die benachbart zueinander angeordnet sind.

Das Batteriemodul 12 weist ein Modulgehäuse 14 auf. Das Modulgehäuse umfasst einen Gehäuseboden 16 und Seitenwände 18. In dem Modulgehäuse 14 sind mehrere Batteriezellen 20 aufgenommen.

Das Batteriemodul 12 kann eine Modulabdeckung 22 aufweisen, die an den Seitenwänden 18 gelagert bzw. mit diesen verbunden ist. Die Modulabdeckung 22 kann plattenartig bzw. im Wesentlichen eben ausgeführt sein. Alternativ kann die Modulabdeckung 22, wie in Fig. 1 beispielhaft illustriert, so ausgestaltet sein, dass die Modulabdeckung 22 in jeweiligen Randbereichen 24, die an den Seitenwänden 18 des Modulgehäuses 14 gelagert sind, eine geringere Höhe HR aufweist als in einem mittigen oder zentralen Bereich 26, dort als Höhe HM bezeichnet.

Dabei kann eine von den Batteriezellen 20 abgewandte Seite 28 der Modulabdeckung 22 zumindest abschnittsweise geneigt oder/und gekrümmt verlaufen, was in der Fig. 1 vereinfacht gezeigt ist. Insbesondere kann die von den Batteriezellen 20 abgewandte Seite 28 konvex gekrümmt sein.

Das Batteriemodul 12 bzw. mehrere Batteriemodule 12 ist bzw. sind auf einer Grundplatte 30 angeordnet. Insbesondere steht das Batteriemodul 12 auf einer Oberseite 32 der Grundplatte 30. Die Grundplatte 30 kann mit einer Karosserie- bzw. Rahmenstruktur eines nicht dargestellten Kraftfahrzeugs verbunden sein.

Das Batteriemodul 12 ist durch wenigstens ein Spannband 34 mit der Grundplatte 30 verbunden. Dabei ist das Spannband 34 übergreifend an dem Batteriemodul 12 angeordnet und derart mit der Grundplatte 30 verbunden, dass das Batteriemodul 12 mittels des Spannbands 34 auf der Grundplatte 30 fixierbar oder fixiert ist.

Die Fixierung des Spannbands 34 ist in Fig. 1 mittels rein schematischer Fixierstellen 36 illustriert. Die Fixierstellen 36 zeigen dabei, dass das Spannband 34 in geeigneter Weise mit der Grundplatte 30 verbunden ist, um das Batteriemodul 12 relativ zur Grundplatte 30 in Position zu halten bzw. zu fixieren.

Das Anordnen eines Spannbands 34 kann bezogen auf die Fig. 1 beispielsweise von links nach rechts erfolgen. Das Spannband 34 wird dabei zunächst an der linken Fixierstelle 36 befestigt. Hierzu gibt es mehrere Möglichkeiten, auf die nachfolgend noch eingegangen wird. Das Spannband 34 kann dann über das Batteriemodul 12 geführte werden, so dass das Spannband 34 übergreifend angeordnet ist.

An der rechten Fixierstelle 34 kann das Spannband 34 dann unter eine passende bzw. gewünschte Zugkraft gesetzt werden, so dass das Batteriemodul 12 sicher auf der Grundplatte 30 gehalten bzw. fixiert ist. Das unter Zugkraft gesetzt Spannband 34 kann an der rechten Fixierstelle 36 in geeigneter Weise fixiert werden, was nachfolgend noch genauer beschrieben wird.

Die Fixierung des Spannbands 34 an den Fixierstellen 36 kann insbesondere durch formschlüssige oder/und materialschlüssige oder/und reibschlüssige Techniken erfolgen. Mit anderen Worten weisen die Fixierstellen 36 eine Struktur auf, durch die eine formschlüssige oder/und materialschlüssige oder/und reibschlüssige Verbindung zwischen einem jeweiligen Spannband 34 und der Grundplatte 30 hergestellt ist.

Fig. 2 zeigt in den Teilfiguren A) und B) vereinfacht und schematisch zwei Beispiele für die Ausgestaltung einer Fixierstelle 36.

In den Fig. 2A und 2B sind jeweils die Grundplatte 30 und das Modulgehäuse 14 angedeutet. Ferner ist jeweils das Spannband 34, insbesondere dessen Endabschnitt, dargestellt. In beiden Beispielen weist die Grundplatte 30 eine Durchgangsöffnung 38 auf, durch die das Spannband hindurch geführt ist. In beiden Beispielen erfolgt daher die Fixierung bzw. Befestigung des Spannbands 34 an der Unterseite 40 der Grundplatte 30.

Fig. 2A zeigt ein Beispiel, bei dem das Spannband 34 ohne Umlenkung, also im Wesentlichen geradlinig verlaufend geführt und fixiert ist. An der Grundplatte 30, insbesondere an deren Unterseite 40 ist eine Art Lagerabschnitt 42 ausgebildet. Das Spannband 34 ist durch die Durchgangsöffnung 38 geführt und ist innerhalb des Lagerabschnitts 42 mittels einer Vergussmasse 44 fixiert. Die Vergussmasse 44 kann auch als Vergussmassenelement bezeichnet werden.

Der Lagerabschnitt 42 ist dabei so ausgeführt, dass zu der Durchgangsöffnung 38 hin eine keilartige Struktur gebildet ist, wobei die Vergussmasse 44 das Spannband 34 keilartig fixiert. Hierdurch können die auf das Spannband 34 wirkenden Zugkräfte zuverlässig in die Grundplatte 30 eingeleitet werden.

Fig. 2B zeigt ein Beispiel, bei dem das Spannband nach der Durchgangsöffnung 38 umgelenkt wird. An der Grundplatte 30 ist eine Art Umlenkabschnitt 46 vorgesehen, entlang dem das Spannband so umgelenkt wird, dass es im Wesentlichen parallel zur Unterseite 40 der Grundplatte 30 verläuft. Entlang der Unterseite 40 der Grundplatte 30 ist ein Lagerabschnitt 42 angeordnet. Der Lagerabschnitt 42 weist ein geneigt bzw. keilartig verlaufendes Ende auf. Das Spannband 34 wird nach der Umlenkung mittels einer Vergussmasse 44 zwischen der Unterseite 40 der Grundplatte 30 und dem Lagerabschnitt 42 fixiert bzw. befestigt.

Auch in diesem Beispiel fixiert die Vergussmasse 44 das Spannband 34 keilartig. Hierdurch können die auf das Spannband 34 wirkenden Zugkräfte zuverlässig in die Grundplatte 30 eingeleitet werden. Ferner führt die Umlenkung des Spannbands 34 zu einer verbesserten Kräfteverteilung, so dass insbesondere auf die Fixierstelle 36 bzw. den Bereich, in dem das Spannband 34 mittels der Vergussmasse 44 gehalten ist, geringere Kräfte wirken verglichen mit dem Beispiel der Fig. 2A.

Fig. 3 zeigt in den Teilfiguren A) und B) vereinfacht und schematisch zwei andere Beispiele für die Ausgestaltung einer Fixierstelle 36.

In den Fig. 3A und 3B sind jeweils die Grundplatte 30 und das Modulgehäuse 14 angedeutet. Ferner ist jeweils das Spannband 34, insbesondere dessen Endabschnitt, dargestellt. In beiden Beispielen erfolgt die Fixierung bzw. Befestigung des Spannbands 34 an der Oberseite 32 der Grundplatte 30.

Fig. 3A zeigt ein Beispiel, bei dem das Spannband 34 an einem Lagerabschnitt 42 umgelenkt wird, derart dass es im Wesentlichen parallel zur Oberseite 32 der Grundplatte 30 verläuft. Der Lagerabschnitt 42 weist, ähnlich wie der Lagerabschnitt 42 der Fig. 2B, ein geneigtes bzw. keilartiges Ende auf. Das Spannband 34 wird nach der Umlenkung mittels einer Vergussmasse 44 zwischen der Oberseite 32 der Grundplatte 30 und dem Lagerabschnitt 42 fixiert bzw. befestigt.

Auch in diesem Beispiel fixiert die Vergussmasse 44 das Spannband 34 keilartig. Hierdurch können die auf das Spannband 34 wirkenden Zugkräfte zuverlässig in die Grundplatte 30 eingeleitet werden. Ferner führt die Umlenkung des Spannbands 34 zu einer verbesserten Kräfteverteilung, so dass insbesondere auf die Fixierstelle 36 bzw. den Bereich, in dem das Spannband 34 mittels der Vergussmasse 44 gehalten ist, geringere Kräfte wirken verglichen mit dem Beispiel der Fig. 2A. Die Kräfteverteilung ist bei dem Beispiel der Fig. 3A ähnlich zu derjenigen im Beispiel der Fig. 2B.

Fig. 3B zeigt ein Beispiel, bei dem das Spannband 34 an einem Umlenkelement 48 umgelenkt wird und entlang eines Lagerabschnitts 42 wieder nach oben geführt wird. Das Umlenkelement 48 ist außerhalb des Bereichs, in dem das Spannband 34 anliegt, mit der Grundplatte 30 verbunden. Der Lagerabschnitt 42 ist in diesem Beispiel im Wesentlichen orthogonal zur Grundplatte 30 ausgerichtet. Eine das Spannband 34 fixierende Vergussmasse 44 ist zwischen Umlenkelement 48 und Lagerabschnitt 42 eingebracht.

Die Umlenkung des Spannbands 34 ist in diesem Beispiel eine um etwa 180°, wohingegen die Beispiele der Fig. 2B und 3A jeweils eine Umlenkung von etwa 90° zeigen. Es wird darauf hingewiesen, dass die Umlenkung nicht nur 90° oder 180° betragen kann. Je nach Ausgestaltung eines Umlenkelements 48 bzw. eines Lagerabschnitts 42 sind auch andere Umlenkungen denkbar.

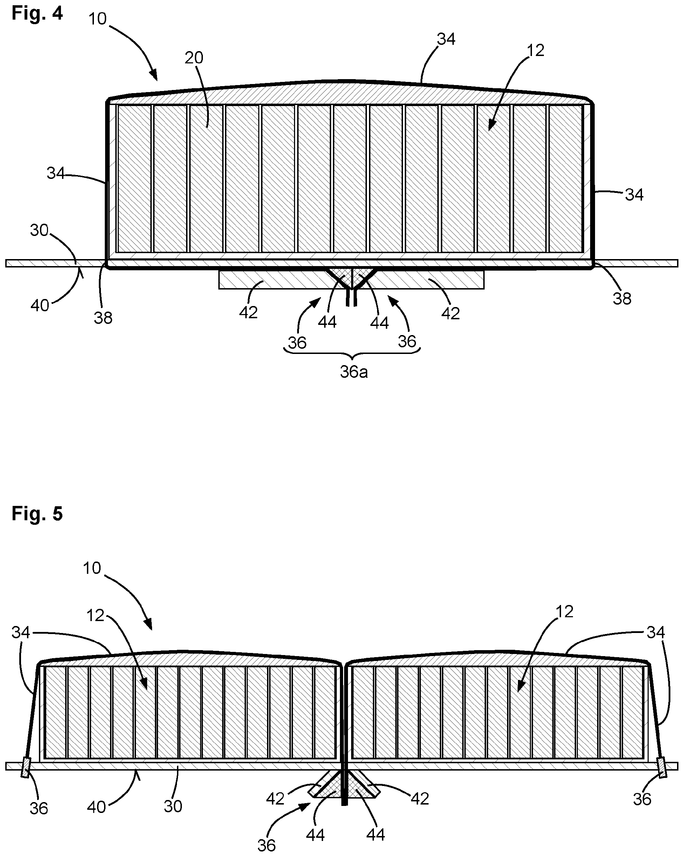

Fig. 4 zeigt ein Beispiel, bei dem das Batteriemodul 12 durch ein übergreifend verlaufendes Spannband 34 gehalten. Das Spannband 34 ist seitlich der Modulgehäuses 14 durch jeweilige Durchgangsöffnungen 38 in der Grundplatte 30 auf die Unterseite 40 geführt. In einem zentralen bzw. mittigen Bereich sind die beiden Enden des Spannbands an jeweiligen Lagerabschnitten 42 umgelenkt und mittels Vergussmasse 44 fixiert bzw. befestigt.

In diesem Beispiel kann der linke Lagerabschnitt 42 zusammen mit dem linken Teil der Vergussmasse 44 als linke Fixierstelle 36 verstanden werden. Ferner kann der rechte Lagerabschnitt 42 zusammen mit dem rechten Teil der Vergussmasse 44 als rechte Fixierstelle 36 verstanden werden. An den beiden Fixierstellen 36 (recht/links) sind also jeweilige Enden des Spannbands 34 relativ zu der Grundplatte 30 werden. Die beiden Fixierstellen 36 liegen in diesem Beispiel sehr nahe beieinander, so dass die beiden Fixierstellen eine Art einzelne Fixiereinheit 36a bilden.

Fig. 5 zeigt ein Beispiel mit zwei benachbart bzw. nebeneinander angeordneten Batteriemodulen 12. Jedes Batteriemodul 12 ist durch ein jeweiliges Spannband 34 an der Grundplatte 30 befestigt bzw. fixiert. Dabei verlaufen die beiden Spannbänder 34 von einer jeweiligen äußeren Fixierstelle 36 zu einer zwischen den beiden Batteriemodulen 12 in der Grundplatte 30 vorgesehenen Durchgangsöffnung 38. Die beiden Spannbänder 34 sind auf der Unterseite 40 der Grundplatte mittels dortigem Lagerabschnitt 42 und Vergussmasse 44 befestigt bzw. fixiert.

Das Beispiel der Fig. 5 zeigt die Option, dass zwei Spannbänder 34, die ein jeweiliges Batteriemodul 12 fixieren an einer gemeinsamen Fixierstelle 36, die zwischen den Batteriemodulen 12 angeordnet ist, mittels Vergussmasse 44 befestigt sein können. Es wird darauf hingewiesen, dass die dargestellte Art der Fixierung, die im Wesentlichen derjenigen der Fig.2A entspricht, auch gemäß dem Beispiel der Fig. 2B ausgeführt sein könnte.

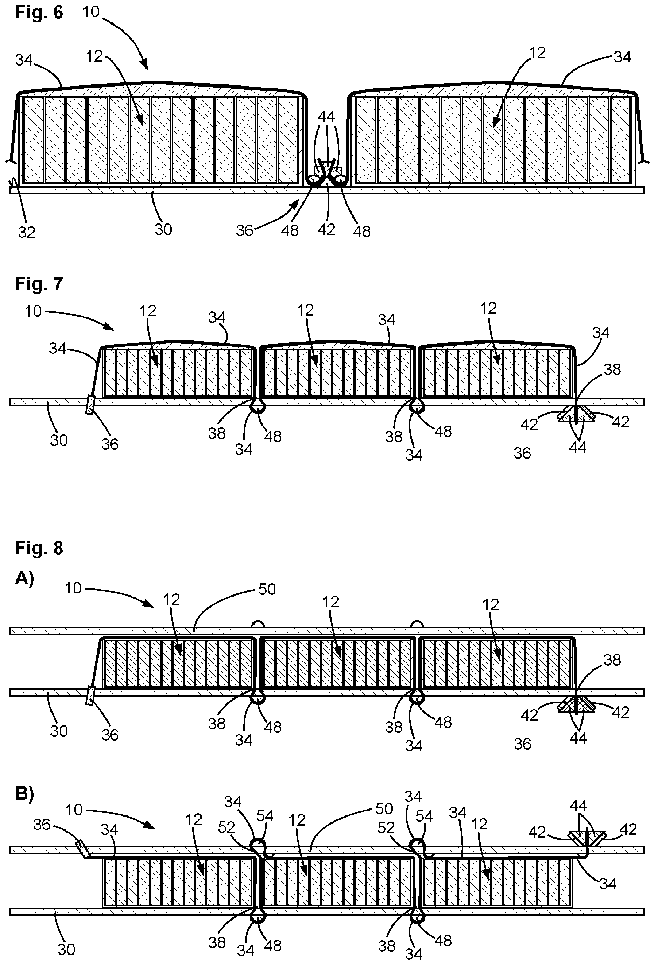

Fig. 6 zeigt ein weiteres Beispiel mit zwei benachbart bzw. nebeneinander angeordneten Batteriemodulen 12. Jedes Batteriemodul 12 ist durch ein jeweiliges Spannband 34 an der Grundplatte 30 befestigt bzw. fixiert. Dabei verlaufen die beiden Spannbänder 34 von einer jeweiligen äußeren Fixierstelle, die in Fig. 6 nicht dargestellt ist, aber in Analogie zum Beispiel der Fig. 5 ausgeführt sein kann, zu einer Fixierstelle 36, die zwischen den beiden Batteriemodulen 12 an der Oberseite 32 der Grundplatte 30 vorgesehen ist. Durchgangsöffnung 38.

Die zwischen den beiden Batteriemodulen 12 angeordnete Fixierstelle 36 umfasst ein jeweiliges Umlenkelement 48 und einen zentral bzw. mittig angeordneten Lagerabschnitt 42. Die beiden Spannbänder 34 sind nach der Umlenkung jeweils mittels Vergussmasse 44 an dem Lagerabschnitt 42 befestigt bzw. fixiert. Gegebenenfalls kann die Vergussmasse 44 zumindest teilweise auch mit dem Umlenkelement 48 verbunden sein.

Die in Fig. 6 gezeigte Fixierstelle 36 zwischen den beiden Batteriemodulen 12 ist ähnlich zu derjenigen der Fig. 3B ausgeführt. Es wird darauf hingewiesen, dass auch eine Fixierstelle in der Art der Fig. 3A zwischen zwei Batteriemodulen 12 eingesetzt werden kann.

Fig. 7 zeigt ein Beispiel mit mehreren Batteriemodulen 12, die benachbart bzw. nebeneinander auf der Grundplatte 30 angeordnet sind. Aus der Fig. 7 ist ersichtlich, dass die mehreren Batteriemodule 12 durch ein gemeinsames Spannband 34 an der Grundplatte gesichert bzw. fixiert sind.

Ausgehend von einer Fixierstelle 36 wird das Spannband 34 über ein erstens (linkes) Batteriemodul geführt und dann durch eine erste Durchgangsöffnung 38 zur Unterseite 40 der Grundplatte 30 geführt. An der Grundplatte 30 ist ein erstes Umlenkelement 48 vorgesehen, um welches das Spannband 34 gelegt ist und wieder nach oben über das zweite (mittlere) Batteriemodul geführt wird. Anschließend verläuft das Spannband wieder nach unten durch eine zweite Durchgangsöffnung 38 in der Grundplatte 30. Es wird erneut an einem weiteren Umlenkelement 48 umgelenkt und wieder nach oben über das dritte (rechte) Batteriemodul 12 geführt. Abschließend wird das Spannband 34 rechts von dem dritten Batteriemodul 12 durch eine weitere Durchgangsöffnung 38 in der Grundplatte 30 geführt und an der Fixierstelle auf der Unterseite 40 der Grundplatte befestigt. Die in Fig. 7 rechte Fixierstelle 36 ist dabei beispielhaft in der Art der Fig. 2A ausgeführt. Die Fixierstelle 36 kann aber auch in der Art der Fig. 2B ausgeführt sein.

Das Beispiel der Fig. 7 soll verdeutlichen, dass mehrere Batteriemodule, insbesondere zwei, drei oder mehr Batteriemodule durch ein gemeinsames Spannband 34 gesichert werden können, wobei das Spannband ausgehend von einer ersten Fixierstelle 36 mäanderartig oder schlaufenartig um die Batteriemodule 12 und dazwischen angeordnete Umlenkelement 48 geführt ist bis es an der zweiten Fixierstelle 36 mittels der Vergussmasse 44 unter Zugkraft stehend gesichert bzw. fixiert wird bzw. ist.

In Bezug auf die in den Fig. 1 und 4 bis 7 gezeigten Beispiele wird darauf hingewiesen, dass in der jeweiligen Schnittdarstellung jeweils nur ein Spannband 34 dargestellt ist, das über ein jeweiliges Batteriemodul 12 geführt ist. Es wird darauf hingewiesen, dass jedes Batteriemodul 12 auch von mehr als einem Spannband 34 gesichert sein kann. Dabei können beispielsweise zwei oder mehr Spannbänder 34 parallel zueinander verlaufend angeordnet sein. Ferner ist es auch denkbar, dass ein Batteriemodul 12 durch zwei gekreuzt, insbesondere orthogonal zueinander verlaufende Spannbänder gesichert sein kann.

Fig. 8 zeigt ein Beispiel mit mehreren Batteriemodulen 12, die benachbart bzw. nebeneinander auf der Grundplatte 30 angeordnet sind. Ferner umfasst die hier dargestellte Batterieanordnung 10 eine Deckplatte 50, welche alle Batteriemodule 12 abdeckt. Die Deckplatte 50 ersetzt in diesem Beispiel individuelle Modulabdeckungen 22, wie sie in den anderen Beispielen gezeigt sind.

Fig. 8A zeigt den Verlauf eines ersten gemeinsamen Spannbands 34, das ausgehend von einer ersten Fixierstelle 36 in der Grundplatte 30 in gleicher Art und Weise geführt ist, wie im Beispiel der Fig. 7.

Fig. 8B zeigt den Verlauf eines zweiten gemeinsamen Spannbands 34, das beispielsweise parallel zu dem ersten Spannband 34 (Fig. 8A) verlaufen kann. Dieses zweite Spannband 34 ist an einer ersten (linken) Fixierstelle 36 befestigt, die mit der Deckplatte 50 verbunden ist. Ausgehend von dieser ersten Fixierstelle 36 kann das Spannband 34 oberhalb des ersten (linken) Batteriemoduls 12 verlaufen und dann durch eine Durchgangsöffnung 38 zur Unterseite 40 der Grundplatte 30 geführt sein. An einem Umlenkelement 48 wird das Spannband wieder nach oben geführt und durch eine Durchgangsöffnung 52 in der Deckplatte 50 geführt. An der Deckplatte 50 ist ein weiteres Umlenkelement 54 angeordnet, so dass das Spannband 34 um dieses Umlenkelement 54 geführt werden kann und danach über das zweite (mittlere) Batteriemodul 12 geführt werden kann.

Das Spannband 34 wird nach erneuter zweifacher Umlenkung an den Umlenkelement 48 und 54 an einer zweiten Fixierstelle 36 befestigt, die an der Deckplatte 50 vorgesehen ist. Die Art der Fixierstelle an der Deckplatte 50 entspricht im Wesentlichen dem Beispiel der Fig. 2A. Es ist auch denkbar, dass die zweite Fixierstelle 36 wie im Beispiel der Fig. 2B ausgeführt sein kann.

Fig. 8 illustriert, dass mehrere Batteriemodule 12, die zwischen der Grundplatte 30 und der Deckplatte 50 angeordnet sind mittels Spannbändern 34 gesichert werden können, die an der Grundplatte 30 oder/und der Deckplatte 50 befestigt bzw. gesichert sind. Hierdurch wird eine Art verspannte Sandwichbauweise geschaffen, wobei die Batteriemodule 12 durch unterschiedlich verlaufende, umgelenkte und gesicherte Spannbänder gesichert sind.

Für alle oben beschriebenen Beispiel der Fig. 1 und 4 bis 8 kann zwischen einem jeweiligen Batteriemodul 12, insbesondere seinem Modulgehäuse 14, und der Grundplatte 30, insbesondere der Oberseite 32, wenigstens ein Dämpfungselement oder/und rutschhemmendes Element angeordnet sein, das in den Figuren nichtexplizit dargestellt ist. Dabei wird beispielsweise an ein flächiges bzw. mattenartiges Element gedacht, auf dem das Batteriemodul angeordnet ist. Alternativ können auch mehrere kleinere Elemente vorgesehen sein, etwa in der Art von mehreren Lagern, auf denen das Batteriemodul abgestützt ist.

Das hier beschriebene Spannband 34 kann ein Verbundmaterialtape mit Glasfasern oder/und Kohlefasern oder/und Basaltfasern sein. Derartige Spannbänder zeichnen sich insbesondere durch hohe Zugfestigkeit aus, wobei sie eine ausreichende Flexibilität für die Montage aufweisen. Ferner eignen sich derartig Verbundmaterialtapes besonders zur materialschlüssigen Verbindung mit der Vergussmasse 44, so dass auf das Spannband 34 wirkende Zugkräfte sicher in die Grundplatte 30 oder/und die Deckplatte 50 eingeleitet werden können.

Ein nicht weiter dargestelltes Kraftfahrzeug mit zumindest teilweise elektrischem Antrieb kann mit einer oben beschriebenen Batterieanordnung 10 gemäß der verschiedenen Beispiele der Fig. 1 bis 8 ausgeführt sein. Dabei können die Batteriemodule 12 eine Hochvolt-Batterie für das Kraftfahrzeug bilden.

## Patentansprüche

1. Batterieanordnung (10) mit
wenigstens einem blockartigen Batteriemodul (12), das mehrere Batteriezellen (20) in einem Modulgehäuse (14) enthält,
einer Grundplatte (30) mit einer Oberseite (32) und einer Unterseite (40), wobei das Batteriemodul (12) auf der Oberseite (32) angeordnet ist,
**dadurch gekennzeichnet, dass**
die Batterieanordnung (10) wenigstens ein Spannband (34) aufweist, wobei das Spannband (34) übergreifend an dem Batteriemodul (12) angeordnet ist und mit der Grundplatte (30) verbunden ist, derart dass das Batteriemodul (12) mittels des Spannbands (34) auf der Grundplatte (30) fixierbar oder fixiert ist.

2. Batterieanordnung (10) nach Anspruch 1, **dadurch gekennzeichnet, dass** an der Grundplatte (30) wenigstens zwei Fixierstellen (36) vorgesehen sind, an denen das Spannband (34) an der Grundplatte (30) gehalten ist.

3. Batterieanordnung (10) nach Anspruch 1 oder 2, **dadurch gekennzeichnet, dass** die Grundplatte (30) wenigstens eine Durchgangsöffnung (38) aufweist, durch die das Spannband (34) geführt ist, wobei eine zugeordnete Fixierstelle (36) an der Unterseite (40) der Grundplatte (30) vorgesehen ist.

4. Batterieanordnung (10) nach Anspruch 2 oder 3, **dadurch gekennzeichnet, dass** das Spannband (34) an wenigstens einer der Fixierstellen (36) umgelenkt angeordnet ist.

5. Batterieanordnung (10) nach einem der Ansprüche 2 bis 4, **dadurch gekennzeichnet, dass** das Spannband (34) an wenigstens einer der Fixierstellen (36) mittels eines Vergussmassenelements (44) befestigt ist.

6. Batterieanordnung (10) nach einem der vorhergehenden Ansprüche, **dadurch gekennzeichnet, dass** das Modulgehäuse (14) eine Modulabdeckung (22) aufweist, welche die Batteriezellen (20) abdeckt, wobei die Modulabdeckung (22) in jeweiligen Randbereichen (24), die an Seitenwänden (18) des Modulgehäuses (14) gelagert sind, eine geringere Höhe (HR) aufweist als in einem mittigen oder zentralen Bereich (26), wobei insbesondere eine von den Batteriezellen (20) abgewandte Seite (28) der Modulabdeckung (22) zumindest abschnittsweise geneigt oder/und gekrümmt verläuft, insbesondere konvex gekrümmt ist.

7. Batterieanordnung (10) nach einem der vorhergehenden Ansprüche, **dadurch gekennzeichnet, dass** mehrere nebeneinander auf der Grundplatte (30) angeordnete Batteriemodule (12) durch wenigstens ein durchgehendes Spannband (34) gehalten sind, das übergreifend an jedem Batteriemodul (12) angeordnet und zwischen zwei benachbarten Batteriemodulen (12) im Bereich der Grundplatte (30) umgelenkt wird.

8. Batterieanordnung (10) nach Anspruch 7, **dadurch gekennzeichnet, dass** sie ein Deckplatte (50) aufweist, welche die Batteriemodule (12) abdeckt, wobei ein weiteres Spannband (34) mit der Deckplatte (50) und den Batteriemodulen (12) verbunden ist.

9. Batterieanordnung (10) nach einem der vorhergehenden Ansprüche, **dadurch gekennzeichnet, dass** zwischen dem Modulgehäuse (14) und der Grundplatte (30) wenigstens ein Dämpfungselement oder/und rutschhemmendes Element angeordnet ist.

10. Batterieanordnung (10) nach einem der vorhergehenden Ansprüche, **dadurch gekennzeichnet, dass** das Spannband (34) ein Verbundmaterialtape mit Glasfasern oder/und Kohlefasern oder/und Basaltfasern ist.
